# EUROPEAN PATENT APPLICATION

(11) **EP 1 496 677 A1**
(43) Date of publication of application: **12.01.2005**
(21) Application number: 03445125.2
(22) Date of filing: 31.10.2003
(51) Int. Cl.: H04M 1/247, H04M 1/725

(54) **Communication apparatus having programmable soft keys and method of programming such soft keys**

(30) Priority: 08.07.2003 EP 03445090
(71) Applicant: Sony Ericsson Mobile Communications AB, 221 88 Lund (SE)
(72) Inventor: Coxhill, Robert, Burnage, Manchester M19 1DT (GB); Swerup, Jan, 131 42 Nacka (SE); Leadbetter, Andrew, Widnes WA8 9AW (GB); Ade-Hall, Martin, Wigan WA6 9AL (GB); Nikolov, Ognian, Manchester M21 9RH (GB)
(74) Representative: Akerman, Marten Lennart

(57) **Abstract**

The invention relates to a communication apparatus having programmable soft keys, especially for sending data e.g. by means of tone signals. The apparatus (1) comprises: data sending means; display means and a keypad together providing soft keys; memory means for storing sets of soft keys. The apparatus is adapted to be programmed to store sets of soft keys, wherein the soft keys are associated with sending data. The soft keys may be programmed by the user or by receiving a configuration message (3) automatically installing the soft key function. The invention also relates to a method of programming soft keys in such an apparatus by using a soft key editor or installing a set-up file in the apparatus received from a server (2).

## Description

### Field of the invention

The present invention relates to a communication apparatus having programmable soft keys, especially for sending data, e.g. by means of tone signals. The soft keys may be programmed by the user or by receiving a configuration message automatically installing the soft key function. The soft key function enables the user to readily access commands for sending e.g. DTMF codes from the apparatus to a tone signal operated service. The invention also relates to a method of programming soft keys in such an apparatus by using a soft key editor or installing a set-up file in the apparatus.

### State of the art

Voice response servers are increasingly popular today. Typically voice response servers offer a range of features controlled via tone signals (DTMF Dual Tone MultiFrequency). The user calls the server using a phone number and the server machine reads voice prompts indicating a list of alternatives to the user and tells him what keys to press in order to activate a certain feature.

However, for the user it is difficult to remember what tones to send using the ordinary number keys. Also, it takes a long time to wait for the server machine to read all the lists of alternatives.

Soft keys are known as such both in computers and communication apparatuses such as mobile phones. Also, it is known to send tone signals by means of mobile phones, see e.g. W098/27712.

### Summary of the invention

The object of the invention is to solve the above mentioned problems, such that the user does not have to remember a long list of alternatives presented by a code operated service server. Instead the apparatus stores the relevant codes and the user can read menus in plain text and access the desired codes via soft key buttons.

In a first aspect, the invention provides a communication apparatus comprising: data sending means; display means and a keypad together providing soft keys; memory means for storing sets of soft keys.

According to the invention, the apparatus is adapted to be programmed to store sets of soft keys, wherein the soft keys are associated with sending data.

In one embodiment, the apparatus comprises a soft key editor for editing soft key settings.

Preferably, the apparatus is adapted to be programmed by receiving and installing a soft key set-up file.

The soft key set-up file may be received by means of infrared data access, Bluetooth®, WAP/WEB download, or using computer (PC) based synchronisation software.

The soft key set-up file may be transmitted by means of an SMS or an MMS.

Suitably, the apparatus is adapted to be connected to a computer for direct reception of the soft key set-up file.

Said soft key file may contain one or more bitmaps and text strings, each of which map directly with a single soft key.

Said soft key file may contain one or more bitmaps with the looks of the various soft keys, and/or the size and location of the various soft keys on the display.

Preferably, when the apparatus is programmed to store at least one set of soft keys, the apparatus is adapted to activate a soft key function in response to a command input on the keypad.

The command may be a shortcut command.

Preferably, when the apparatus is programmed to store at least one set of soft keys, the apparatus is adapted to activate a soft key function in response to dialling a telephone number associated with said soft key function.

A group of telephone numbers may be associated with the same soft key function.

Suitably, the apparatus is provided with a touch screen.

The apparatus may be adapted so send data by means of tone signals (DTMF), a wireless local area network (WLAN), general packet radio service (GPRS), third generation wideband CDMA, or Bluetooth®.

The apparatus may be a telephone, a pager, a communicator, a smart phone or an electronic organiser.

In a second aspect, the invention provides a method for programming soft keys in an apparatus.

According to one embodiment of the invention, the method includes the steps of:
in a server hosting a service with alternatives selectable by receiving data, identifying a calling apparatus by means of the caller number (CLI); sending a soft key set-up file from the server to the calling apparatus;
installing a menu function in the calling apparatus using the soft key set-up file, wherein the menu function is adapted to present the selectable alternatives as soft keys, said soft keys being associated with sending data.

The soft key set-up file may be transmitted by means of an SMS or an MMS.

Suitably, the server first asks if the user wants to install soft keys, before sending the soft key set-up file.

Preferably, the server asks the user by means of a voice message.

When the apparatus is programmed to store at least one set of soft keys, the server may send a further soft key file as a response to a selection made with a previously installed soft key, the further soft key file being installed automatically in the apparatus, in order to show options on the display associated with the selection made.

Said soft key file may contain one or more bitmaps and text strings, each of which map directly with a single soft key.

Said soft key file may contain one or more bitmaps with the looks of the various soft keys, and/or the size and location of the various soft keys on the display.

In one embodiment, the server stores the numbers of all apparatuses to which the soft key set-up file has been sent, and, if the server detects that an apparatus is calling to which the soft key set-up file already has been sent, the server does not try to send a soft key set-up file.

According to another embodiment of the invention, the method includes the steps of:
from a computer, accessing a server hosting a service with alternatives selectable by receiving data, requesting a soft key set-up file, stating an apparatus to which the soft key set-up file is to be transmitted by means of the caller number (CLI); whereupon the server sends the soft key set-up file from the server to the calling apparatus;
installing a menu function in the calling apparatus using the soft key set-up file, wherein the menu function is adapted to present the selectable alternatives as soft keys, said soft keys being associated with sending data.

The soft key set-up file may be transmitted by means of an SMS or an MMS.

Said soft key file may contain one or more bitmaps and text strings, each of which map directly with a single soft key.

Said soft key file may contain one or more bitmaps with the looks of the various soft keys, and/or the size and location of the various soft keys on the display.

According to a further embodiment of the invention, the method includes the steps of:
from a computer, accessing a server hosting a service with alternatives selectable by receiving data, requesting a soft key set-up file, stating a computer address to which the soft key set-up file is to be transmitted; whereupon the server sends the soft key set-up file from the server to said address; sending the soft key set-up file from the computer to the apparatus, installing a menu function in the apparatus using the soft key set-up file, wherein the menu function is adapted to present the selectable alternatives as soft keys, said soft keys being associated with sending data.

The soft key set-up file may be transmitted from the computer to the apparatus by means of infrared data access, Bluetooth®, or using computer based synchronisation software.

The soft key set-up file may be transmitted by means of an e-mail to the computer.

The soft key set-up file may be transmitted from the computer to the apparatus by means of cable, IR link or radio.

Said soft key file may contain one or more bitmaps and text strings, each of which map directly with a single soft key.

Said soft key file may contain one or more bitmaps with the looks of the various soft keys, and/or the size and location of the various soft keys on the display.

### Brief description of the drawings

The invention will be described in detail below with reference to the accompanying drawings, in which:
fig. 1 is a schematic view of an apparatus according to the invention illustrating the procedure for setting up soft keys,
fig. 2 is a schematic view of an apparatus with a touch screen according to one embodiment,
fig. 3 A is a schematic view of an apparatus with soft keys according to another embodiment, and
fig. 3 B is a view of a display with a different menu belonging to the apparatus of fig. 3 A.

### Detailed description of preferred embodiments

As mentioned in the introduction, the invention is useful for sending commands and requests by means of tone signals (DTMF) when communicating with servers that require data or voice commands to respond to the user's wishes. Instead of the user first listening and remembering a list of alternatives and then sending the correct answer with the number keys, the user may select a response in a menu with plain text, which has already been installed in the phone and is ready for use. In the menu or soft key panel the soft keys, identified with the codes in plain text, are associated with the proper codes, which may be several figures and characters long. Thus, a displayed text string is associated with a tone or data string for each feature button.

The invention is equally applicable to other transmission methods than DTMF, such as for instance WLAN (wireless local area network), GPRS (general packet radio service), 3G WCDMA (third generation wideband CDMA), and Bluetooth®.

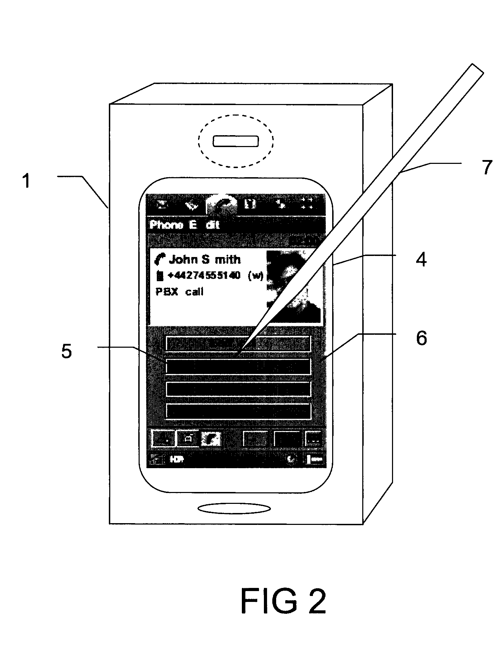

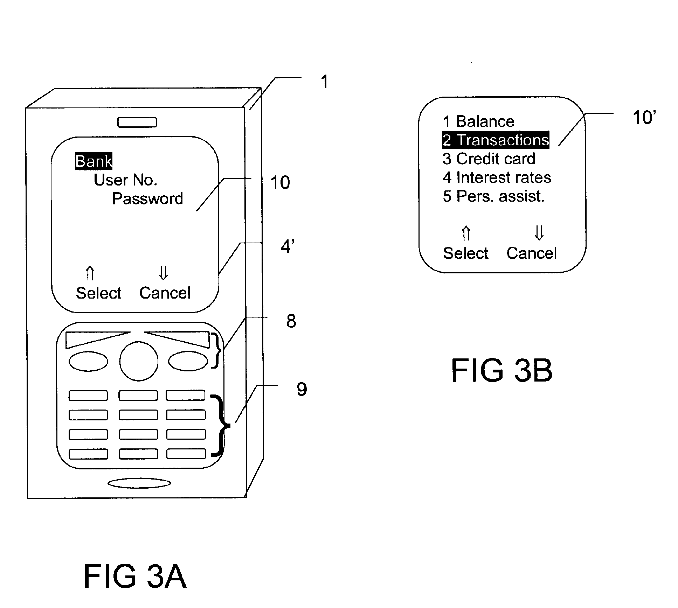

As is known in the art, soft keys may take various forms. One example is a touch screen (fig. 2), where the display itself is touch sensitive and the keys are activated by pressing with a stylus or a finger. It is also common to use soft keys with an ordinary display (fig. 3A), where physical keys correspond to symbols shown on the display and the soft keys are selected by associating the geometrical location of the physical key with the display or simply by pressing the ordinary number keys having a corresponding number shown on the display. Herein, a display showing a number of soft keys is referred to as a soft key panel or menu. A menu can consist of several layers of which only panel one is shown at a time, and the higher and lower layers are entered and displayed as the user navigates back and forth in the menu.

The present invention is applicable in various communication apparatuses including mobile telephones, cordless telephones and plain fixed telephones as well as pagers, communicators, smart phones or electronic organisers. The required common features are only that the communication apparatus should comprise a data sending means, a display and keypad, which together may provide soft keys and a memory for storing sets of soft keys.

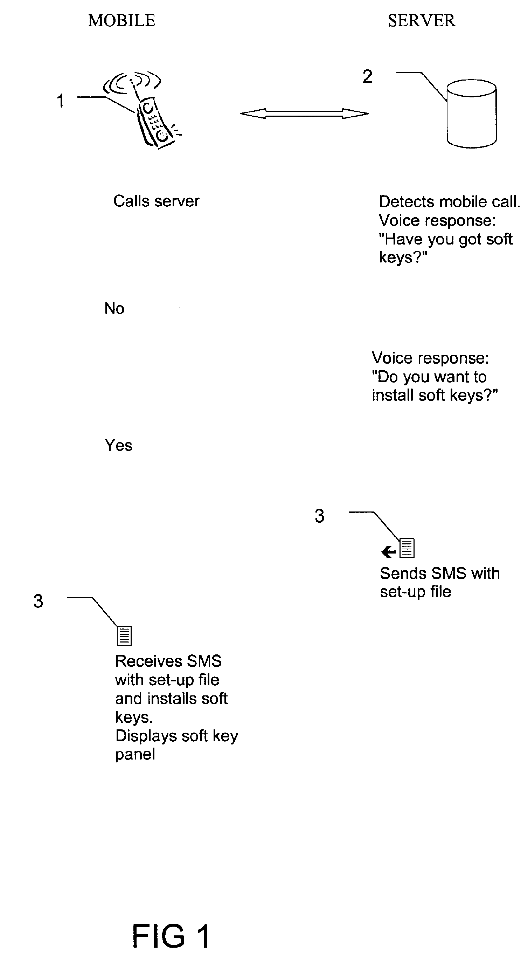

Before the user can use the soft key function, it has to be installed in the telephone. Fig. 1 shows an example of installing the soft key function in a mobile phone 1 communicating with a server 2 hosting tone operated services and a voice response function.

The user starts by calling the server from the mobile phone 1. The server 2 detects the mobile call and notes the calling number (CLI Calling Line Identity). The server responds by asking "Have you got soft keys?". The mobile phone answers "No" (by saying "No" or pressing the appropriate key) and the server 2 then responds by asking "Do you want to install soft keys?". The mobile phone user now responds "Yes", whereupon the server 2 sends a set-up file 3 to the calling number. The server suitably uses an SMS (Short Message Service) or MMS (Multimedia Message Service) message.

The mobile phone 1 receives the file 3 and automatically installs the soft keys. Immediately a soft key panel is displayed on the mobile phone. Alternatively, the mobile phone asks for a lock code from the user before installing the soft keys, depending on the user's setting of the phone. The soft keys are now ready for use.

The file 3 may contain a hierarchical menu system consisting of several layers of which only panel one is shown at a time, and the higher and lower layers are entered and displayed as the user navigates back and forth in the menu during a subsequent session with the server.

Alternatively, in another embodiment of the invention, the menu options which are shown on the screen during the phone call are dynamically controlled by the remote server or exchange. The remote exchange controls the options which are available on the phone's display by means of SMS or some other communication channel (e.g. GPRS, IP).

The type of SMS which is used is a special type which has a flag set within the header. On receipt of these types of messages, the phone does not alert the user in the normal fashion. The user is in fact not aware that the message is sent by SMS. This allows a more complicated form of menu structure to be handled by the phone.

For example, today when a user phones his voicemail account, initially he might have the following options which are read out to him:
1) Listen to new messages
2) Listen to stored messages
3) Change PIN code
4) Speak to operator
5) Etc...
He selects option 1) and the new options are read out to him before the first message is played:
1) Next message
2) Repeat message
3) Delete message
4) Etc...
In the present invention, after option 1) is selected, the voicemail server, upon receipt of the DTMF tone which corresponds to "Listen to new messages" sends an SMS to the phone. This SMS contains coded information which tells the phone which of the pre-configured buttons should be displayed for that particular scenario.

Every time the user selects an option, the network sends out an SMS which tells the phone which of the options to display. It is also possible that the buttons could actually be configured by these SMSs, rather than the SMS referencing preconfigured options.

Thus, when the phone is programmed to store at least one set of soft keys, the server sends a further soft key file as a response to a selection made with a previously installed soft key, the further soft key file being installed automatically in the phone, in order to show options on the display associated with the selection made. The soft key file may contain one or more bitmaps and text strings, each of which map directly with a single soft key. The looks of the various soft keys may be defined, e.g. in the form of icons having special appearances to be associated with the features in question. Also, the size and location on the display may be included. Thus, the soft key file contains one or more soft key definitions.

The soft key file is stored in the mobile phone. The soft key set is also associated with the phone number to the server. A dialled phone number is compared with a parameter defined for the soft key or soft key panel. The parameter may consist of a phone number, a number series or even a set of number series. Thus, next time the user calls the same number the soft key panel is displayed automatically on the phone and the user can answer "Yes" to the question "Have you got soft keys?".

The mobile phone can at the same time hold a number of different soft key panels, normally hidden to the user. When he dials one of the servers as detected by means of a defined parameter, the corresponding soft key panel is displayed.

Also, the server may store the caller number CLI, such that the server already knows that the mobile phone probably has installed soft keys and do not have to ask any questions to the caller, but will instead assume that the user is prepared to use his soft keys already from the start. This saves time for the user when communicating with this server.

The mobile phone may also display a soft key panel when there is no call active, serving as a shortcut to popular services, selected by the user. The soft key function is called into action by pressing keys using the normal menu system of the phone. The first soft key may be associated with calling the desired server or other user-defined functions.

The user may also obtain the set-up file through a computer network, such as the Internet or a local network. In this case, the user uses his computer to log in to the server's website. Here the user can indicate the type and model of the telephone and also to where the set-up file is to be sent. This may be sent by an e-mail to the user's computer or directly by means of a message to the mobile phone directly as above. If the set-up file is sent as an e-mail to the user's computer the user then has to send the file from the computer to the phone. This may be done be means of a cable, an IR or radio connection.

In accordance with the invention, the configuration file can be installed via any communications means to the device, be that IRDA (Infrared Data Access), Bluetooth®, WAP/WEB download, or using computer (PC) based synchronisation software. In dependence of the operating system installed in the device, a recognition framework may be employed to match the data type retrieved by means of a recognizer plugin.

The mobile phone may also be provided with a soft key editor, such that the user himself may create soft key menus and panels directly in the phone with the appropriate codes associated with the desired buttons. By means of the editor, the user can also change the button icons, and the size and location on the display. Also, such an editor may be installed in the user's computer for creating the soft key file using the larger capacity and more user friendly keyboard and display of the computer to create the soft key file there, and then send the ready file to the mobile phone.

Fig. 2 shows an embodiment of the apparatus according to the invention having a touch screen display 4 for showing the soft key panel 6. The user may employ a stylus 7 or his finger to point and depress the soft key buttons.

In fig. 2 the mobile phone 1 has been provided with a soft key panel to be used when the mobile phone is connected under a corporate telephone exchange PBX (Private Branch Exchange). The display features specialised PBX soft keys 5 for performing a new call, call back or a conference call. These soft keys are programmable by the company's IT Manager via XML structured configuration files. The user may configure his corporate mobile phone by importing the set-up file, e.g. a .pbx type settings file. The file can be received via e-mail, stored on a external, removable storage device or downloaded from the Internet. Also, soft keys can be arranged for registering presence, absence, meetings, travels etc in the corporate PBX using soft key buttons. For instance the code *23*3*1540# may be accessed by simply locating the proper soft key in a menu for registering "conference" in the PBX.

In fig. 3. another embodiment of an apparatus according to the invention is shown. This mobile phone 1 is provided with a plain display 4' (it could also be a touch screen display), wherein soft keys are actuated by pressing on the selection keys 8 and the ordinary number keys 0-9*#. As is common in mobile phones, the arrows shown in the display are actuated by means of the top soft keys 8. The functions "select" and "cancel" are actuated by means of the lower soft keys 8. In this apparatus a soft key panel from a bank server has been installed by means of one of the methods a set forth above. When the user wants to call the bank he can either choose "bank" from the phone book (also stored in the phone) or just dial the phone number of the bank. Then, automatically the menu 10 should be displayed. When the word "bank" is highlighted as shown, the user can dial the number by pressing the select button (or yes button). The other functions can be selected by moving the highlighting by means of the arrow buttons. For instance the user's user number may be dialled by selecting "user number" and thereafter the password may be dialled by selecting "password". For security reasons, it may be required that the password is dialled manually.

After the password has been sent to the bank server, another menu is shown for continuing requesting various services. This menu is of course stored together with the start menu, but is not shown until the user has passed to a lower layer of the soft key menu system. Alternatively, this menu 10' is received by a separate message. This menu 10' is shown in fig. 3 B. The user can choose to view his transactions by selecting "2 transactions", either by highlighting and selecting by means of the arrow and select buttons 8 or just by pressing the number button "2" of the number buttons 9. Then a code, such as 22#, will be sent to the bank server.

A person skilled in the art will realise that the format and design of the menus may be varied. Also, the present invention is applicable to all kinds of soft keys whether they are implemented in a touch screen or by means of geometrical selection soft keys etc. The invention may be implemented by various combinations of software and hardware, all of which are considered to fall within the scope of the accompanying claims.

## Claims

1. A communication apparatus comprising: data sending means; display means (4, 4') and a keypad (8, 9) together providing soft keys; memory means for storing sets of soft keys, **characterised in that** the apparatus (1) is adapted to be programmed to store sets of soft keys, wherein the soft keys are associated with sending data.

2. An apparatus in accordance with claim 1, **characterised in that** the apparatus (1) comprises a soft key editor for editing soft key settings.

3. An apparatus in accordance with claim 1 or 2, **characterised in that** the apparatus (1) is adapted to be programmed by receiving and installing a soft key set-up file (3).

4. An apparatus in accordance with claim 3, **characterised in that** the soft key set-up file (3) is received by means of infrared data access, Bluetooth®, WAP/WEB download, or using computer (PC) based synchronisation software.

5. An apparatus in accordance with claim 3, **characterised in that** the soft key set-up file (3) is transmitted by means of an SMS or an MMS.

6. An apparatus in accordance with claim 3 or 4, **characterised in that** the apparatus (1) is adapted to be connected to a computer for direct reception of the soft key set-up file (3).

7. An apparatus in accordance with any one of claims 3 to 6, **characterised in that** said soft key file (3) contains one or more bitmaps and text strings, each of which map directly with a single soft key.

8. An apparatus in accordance with any one of claims 3 to 7, **characterised in that** said soft key file (3) contains one or more bitmaps with the looks of the various soft keys (5, 6), and/or the size and location of the various soft keys (5, 6) on the display (4, 4').

9. An apparatus in accordance with any one of claims 1 to 8, **characterised in that**, when the apparatus (1) is programmed to store at least one set of soft keys, the apparatus is adapted to activate a soft key function in response to a command input on the keypad.

10. An apparatus in accordance with claim 9, **characterised in that** the command is shortcut command.

11. An apparatus in accordance with any one of claims 1 to 10, **characterised in that**, when the apparatus (1) is programmed to store at least one set of soft keys, the apparatus is adapted to activate a soft key function in response to dialling a telephone number associated with said soft key function.

12. An apparatus in accordance with claim 11, **characterised in that** a group of telephone numbers is associated with the same soft key function.

13. An apparatus in accordance with any one of claims 1 to 12, **characterised in that** the apparatus (1) is provided with a touch screen (4).

14. An apparatus according to any one of claims 1 to 13, **characterised in that** the apparatus is adapted so send data by means of tone signals (DTMF), a wireless local area network (WLAN), general packet radio service (GPRS), third generation wideband CDMA, or Bluetooth®.

15. An apparatus according to any one of claims 1 to 14, **characterised in that** the apparatus is a telephone (1), a pager, a communicator, a smart phone or an electronic organiser.

16. A method for programming soft keys in an apparatus (1), **characterised by** the steps of:
in a server (2) hosting a service with alternatives selectable by receiving data, identifying a calling apparatus (1) by means of the caller number (CLI); sending a soft key set-up file (3) from the server (2) to the calling apparatus (1);
installing a menu function in the calling apparatus (1) using the soft key set-up file (3), wherein the menu function is adapted to present the selectable alternatives as soft keys, said soft keys being associated with sending data.

17. A method in accordance with claim 16, **characterised in that** the soft key set-up file (3) is transmitted by means of an SMS or an MMS.

18. A method in accordance with claim 16 or 15, **characterised in that** the server (2) first asks if the user wants to install soft keys, before sending the soft key set-up file (3).

19. A method in accordance with claim 18, **characterised in that** the server (2) asks the user by means of a voice message.

20. A method in accordance with any one of claims 16 to 19, **characterised in that**, when the apparatus (1) is programmed to store at least one set of soft keys, the server (2) sends a further soft key file as a response to a selection made with a previously installed soft key, the further soft key file being installed automatically in the apparatus, in order to show options on the display associated with the selection made.

21. A method in accordance with any one of claims 16 to 20, **characterised in that** said soft key file (3) contains one or more bitmaps and text strings, each of which map directly with a single soft key.

22. A method in accordance with any one of claims 16 to 21, **characterised in that** said soft key file (3) contains one or more bitmaps with the looks of the various soft keys (5, 6), and/or the size and location of the various soft keys (5, 6) on the display (4, 4').

23. A method in accordance with any one of claims 16 to 22, **characterised in that** the server (2) stores the numbers of all apparatuses to which the soft key set-up file has been sent, and that, if the server detects that an apparatus (1) is calling to which the soft key set-up file already has been sent, the server (2) does not try to send a soft key set-up file (3).

24. A method for programming soft keys in an apparatus, **characterised by** the steps of:
from a computer, accessing a server hosting a service with alternatives selectable by receiving data, requesting a soft key set-up file, stating an apparatus to which the soft key set-up file is to be transmitted by means of the caller number (CLI); whereupon the server sends the soft key set-up file from the server to the calling apparatus;
installing a menu function in the calling apparatus using the soft key set-up file, wherein the menu function is adapted to present the selectable alternatives as soft keys, said soft keys being associated with sending data.

25. A method in accordance with claim 24, **characterised in that** the soft key set-up file is transmitted by means of an SMS or an MMS.

26. A method in accordance with any one of claims 24 to 25, **characterised in that** said soft key file (3) contains one or more bitmaps and text strings, each of which map directly with a single soft key.

27. A method in accordance with any one of claims 24 to 26, **characterised in that** said soft key file (3) contains one or more bitmaps with the looks of the various soft keys (5, 6), and/or the size and location of the various soft keys (5, 6) on the display (4, 4').

28. A method for programming soft keys in an apparatus, **characterised by** the steps of:
from a computer, accessing a server hosting a service with alternatives selectable by receiving data, requesting a soft key set-up file, stating a computer address to which the soft key set-up file is to be transmitted; whereupon the server sends the soft key set-up file from the server to said address; sending the soft key set-up file from the computer to the apparatus, installing a menu function in the apparatus using the soft key set-up file, wherein the menu function is adapted to present the selectable alternatives as soft keys, said soft keys being associated with sending data.

29. A method in accordance with claim 28, **characterised in that** the soft key set-up file (3) is transmitted from the computer to the apparatus by means of infrared data access, Bluetooth®, or using computer based synchronisation software.

30. A method in accordance with claim 28 or 29, **characterised in that** the soft key set-up file is transmitted by means of an e-mail to the computer.

31. A method in accordance with claim 28, 29 or 30, **characterised in that** the soft key set-up file is transmitted from the computer to the apparatus by means of cable, IR link or radio.

32. A method in accordance with any one of claims 28 to 31, **characterised in that** said soft key file (3) contains one or more bitmaps and text strings, each of which map directly with a single soft key.

33. A method in accordance with any one of claims 28 to 32, **characterised in that** said soft key file (3) contains one or more bitmaps with the looks of the various soft keys (5, 6), and/or the size and location of the various soft keys (5, 6) on the display (4, 4').
